# EUROPEAN PATENT APPLICATION

(11) **EP 4 647 746 A1**
(43) Date of publication of application: **12.11.2025**
(21) Application number: 24315227.9
(22) Date of filing: 07.05.2024
(51) Int. Cl.: G01N 21/95, H01L 21/683, H01L 21/687

(54) **SUPPORT FOR A DARK FIELD OPTICAL INSPECTION SYSTEM**

(71) Applicant: Unity Semiconductor, 38330 Montbonnot-Saint-Martin (FR)
(72) Inventor: Durand De Gevigney, Mayeul, 38330 MONTBONNOT SAINT MARTIN (FR)
(74) Representative: IP Trust

(57) **Abstract**

The invention concerns a support (8) to receive a substrate (S) made of a transparent material for a dark field optical inspection system. The support (8) comprises a flat body (8a) made of a non-transparent material and presenting an optically polished first surface (F1) oriented toward a main face (MF) of the support to specularly reflect an incident light beam (6,6'), and a diamond like carbon layer (8b) disposed at least on, and in contact with, the optically polished first surface (F1) of the flat body (8a). The diamond like carbon layer (8b) .is favorizing the specular reflection of the incident light beam (6,6') rather than its scattering. The invention also relates to a dark field optical inspection system comprising such a support.

## Description

### FIELD OF THE INVENTION

The present invention relates to a support for a dark field optical inspection system. The optical inspection system detects the possible presence of defects such as particles, on a surface of a substrate, or more generally allows to characterize the surface and sub-surface condition of the substrate. The substrate can be a wafer for the manufacture of devices for instance in the field of microelectronics, optics, microsystems, or optoelectronics.

### BACKGROUND OF THE INVENTION

Substrates, such as wafers for electronics, optics or optoelectronics applications, need to be inspected to detect, identify and/or characterize possible defects present on their surface or their subsurface. Defects can be particles, crystal defects, scratches, or surface roughness.

This inspection is generally intended to provide qualitative or quantitative information, such as, for example, the location, size and/or nature of the defects. This information about the surface condition of the substrate may be representative of the quality of the substrate manufacturing process or of a production step in which the substrate is used.

Documents WO2017167573 and WO0239099 disclose dark field optical inspection systems for inspecting the frontside of such substrates, i.e. the surface of the substrate that is prepared to be processed in subsequent manufacturing steps. Those inspection systems are based on Laser Doppler Velocimetry (LDV) and comprises an optical source emitting a first and a second light beams oriented in relation to one another so as to form, at their intersection, a measurement volume comprising a plurality of parallel interference fringes. This technique presents the advantage of allowing a high sensitivity and a measurement volume well localized on the frontside and/or depth of the substrate.

The inspection system comprises a support presenting a main face to receive, in direct contact, the backside of the substrate. The support also positions the substrate relatively to the optical source such that the measurement volume intersects the frontside of the substrate and define, on this frontside surface, a measurement spot. The support is rotated so that the measurement spot is scanned along concentric measurement paths on the frontside of the wafer. The scattered light, but not the specularly reflected light, is collected by collecting mirrors and directed to a detector for receiving the collected light and for providing an electrical detection signal representing the variation in intensity of the collected light as the measurement spot is scanned along the measurement path.

Substrates that are transparent to the light beams, as this may be the case for silicon carbide (SiC) or glass wafers, cause the light beam to be transmitted through the frontside surface of the substrate under inspection and to be projected onto the main face of the support. Defects, irregularities of the main surface of the support or foreign matter that may be present on this main face, scatters the projected light beam. The light scattered back toward the measurement spot is also collected by the collected mirrors and directed to the detector. Consequently, the surface state of the support main face produces a background noise in the electrical signal established by the detector. Larger defects, such as foreign matters or particle, present on the support main face may produce a pulse in the electrical signal which can be also detected as being due to a defect present on, or in, the substrate under inspection. More generally speaking, the light scattered back from the main face of the support tend to produce background noise in the electrical signal and to reduce the signal to noise ratio to a point where real defects present on, or in, the substrate under inspection may become difficult to detect.

Document JP2015094002A proposes a support for an exposure apparatus or inspection apparatus. The support is made of a rectangular quartz glass flat body entirely coated with a diamond like carbon (DLC) layer to limit the total reflectance of the support and to avoid light entering into the support from its peripheral side. The document does not distinguish between light scattered and light reflected on the support, and the proposed support is not adapted for a dark field optical inspection system.

Document US10435567 discloses the optical properties of DLC as an anti-reflective coating.

### OBJECT OF THE INVENTION

A purpose of the invention is to resolve, at least partially, the aforementioned problem. More particularly, a purpose of the invention is to provide a support for a dark field optical inspection system, the inspection system providing an electrical detection signal more reliable and/or presenting a lower signal to noise ratio, than a dark field optical inspection system comprising a support according to the state of the art.

### SUMMARY OF THE INVENTION

To this effect, the invention relates to a support for a dark field optical inspection system comprising an optical source emitting at least one incident light beam, the at least one incident light beam presenting an inspection wavelength, the support comprising a main face to receive a substrate made of a transparent material at the inspection wavelength, the support comprising:
- a flat body made of a non-transparent material at the inspection wavelength and presenting an optically polished first surface oriented toward the main face to specularly reflect the incident light beam, and
- a diamond like carbon layer disposed at least on, and in contact with, the optically polished first surface of the flat body, an exposed surface of the diamond like carbon layer constituting the main face of the support and favorizing the specular reflection of the incident light beam rather than its scattering.

According to further non limiting features of the invention, either taken alone or in any technically feasible combination:
- the flat body is made of aluminum;
- T the flat body is polished by diamond machining, polishing, or lapping;
- the first surface is presenting an average roughness of less than 10 nm;
- the exposed surface of the diamond like carbon layer is presenting an average roughness of less than 10 nm;
- the diamond like carbon layer presents a thickness less than 10 micrometers;
- a superficial portion of the diamond like carbon layer is constituted of amorphous carbon;
- the diamond like carbon layer presents a refractive index greater than 2.0;
- the diamond like carbon layer presents a refractive index lower than 1.8;
- the diamond like carbon layer presents an extinction coefficient larger than 0.7 for at least wavelengths in the UV;
- the flat body is provided with vacuum features the diamond like carbon layer extending in the vacuum features.

According to another aspect, the invention relates to a dark field optical inspection system for a substrate comprising:
- at least one optical source for emitting at least one light beam presenting an inspection wavelength;
- a support as defined previously arranged to position the substrate relatively to the optical source such that the at least one light beam is projected on the substrate.

According to further non limiting features of this aspect of the invention, either taken alone or in any technically feasible combination:
- the dark field optical inspection further comprises a collector for collecting at least a portion of the light scattered by defects present on, or close to, the frontside of the substrate, but not the light specularly reflected on the frontside of the substrate (S) and/or by the support;
- the dark field optical inspection further comprises:
   o a controller for controlling a relative movement of the support and of the at least one optical source to scan the at least one light beam along a measurement path on the frontside of the substrate;
   o a detector associated to the collector for receiving the collected light and for providing a signal representing the variation in intensity of the collected light as the at least one light beam is scanned along the measurement path;
- the at least one optical source is configured to emit a first and a second light beams intersecting at a measurement spot on the frontside of the substrate, the first and the second light beams presenting the inspection wavelength.

### FIGURES

Many other features and advantages of the present invention will become apparent from reading the following detailed description, when considered in conjunction with the accompanying drawings, in which:
- Figure 1 represents a dark field optical inspection system according to one embodiment;
- Figure 2 represents lights beams intersecting at the surface of a substrate under inspection to define a measurement spot;
- Figure 3a and 3b represents respectively a cross section and a top view of a support with through hole and groove connected to a vacuum circuit according to an embodiment;
- Figure 4a and 4b illustrate the reflection of an incident light beam on, respectively, a support according to the state of the art and according to the invention.

### DETAILED DESCRIPTION OF SPECIFIC EMBODIMENTS OF THE INVENTION

### Inspection system

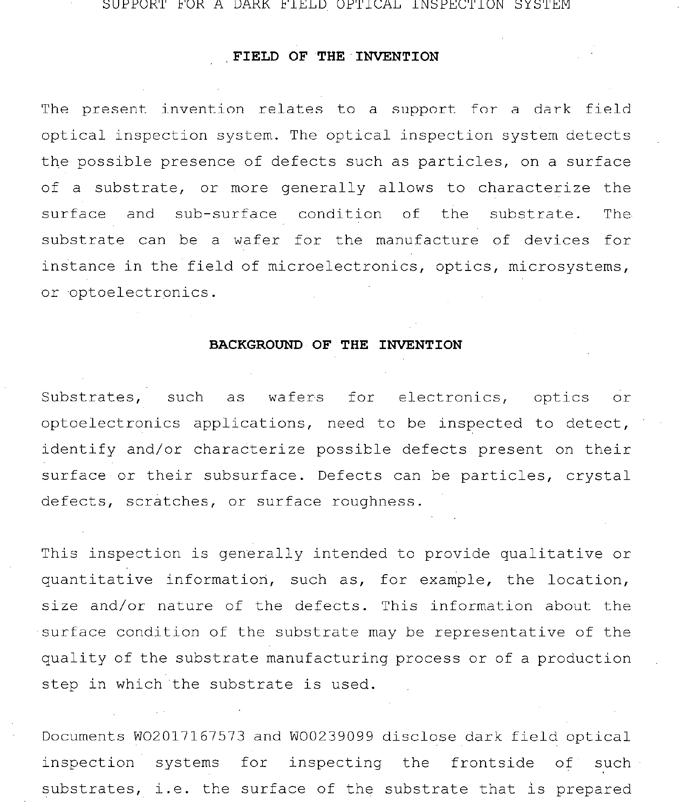

Figure 1 represents a dark field optical inspection system 1 according to one embodiment. The dark field optical inspection system 1 comprises at least one optical source 2, for instance a laser source injected into an optical fiber. The light source 2 produces a main light beam 3, preferably monochromatic or quasi monochromatic, presenting a wavelength, named "inspection wavelength" in the rest of this disclosure, in the UV, visible or infrared range. The optical source 2 of this embodiment is coupled to an optical system 2' comprising a beam splitter 4 splitting the light in two fiber paths 5, 5', such that the main light beam 3 from the light source 2 produces two light beams 6, 6'. The optical system may be an interferometric system. The beam splitter 4 and the fiber paths 5, 5' are configured such that the first and the second light beam 6, 6' are contained in a single plane, named "reference plane", or define, with their optical axis, such a reference plane. Two converging optical element 7, 7', such as a collimating lens, are respectively disposed in the propagation path of the first light beam 6 and of the second light beam 6' such that the two light beams 6, 6' are oriented in relation to one another so as to form, at their intersection, a measurement volume V as this is shown on figure 2. In a preferred embodiment, the two light beams 6, 6' are coherent and able to interfere with each other, so that the measurement volume V comprises a plurality of parallel interference fringes.

Other configuration of the light source 2 and of the optical system 2' than the one presented on the embodiment of figures 1 and 2 are naturally possible. Generally speaking, in a dark field optical inspection system 1 according to the invention, the light source 2 and the optical system 2' are configured to emit at least one incident light beam presenting an inspection wavelength.

Pursuing the description of the embodiment presented on figure 1, the inspection system 1 also comprises a support 8 presenting a main face to receive a substrate S. The support 8 is precisely arranged in the system, relatively to the optical system 2', such that the first and the second light beams intersection, the measurement volume V, intersect the substrate frontside, and define a measurement spot M on this frontside. The support 8 will be described with greater detail in a further passage of the present description.

The substrate S may be a wafer, i.e. a circular plate or disk of material presenting two opposing parallel surfaces respectively called the backside and the frontside. By convention, the backside of the substrate S corresponds to the surface put into contact with, or oriented towards, the support 8 of the inspection device 1. Advantageously, the support 8 presents a dimension that is corresponding or slightly greater or slightly smaller than the dimension of the substrate S, for instance by 1 mm or 2mm, such that the backside of the substrate S is entirely or almost entirely in contact with the support. In some embodiments, the wafer may be made of material which is transparent or quasi transparent at the inspection wavelength, such as SiC, glass or synthetic sapphire, that is, single crystal aluminum oxide for visible wavelengths, or semiconductor material such as silicon for inspection wavelengths in the infrared. But the invention is not limited to substrate in the form of a wafer, and its principle may be applied to any substrates, and in particular to any transparent substrate (at the inspection wavelength) of any shape and constitution as this will be detailed below.

The support 8 and the optical system 2' are movable relatively to each other and the inspection system 1 is designed so that the frontside of the substrate S passes through said measurement volume during its movement. As this is well known in the art, the support 8 and/or the optical system may be associated with actuators able to move one with respect to the other to achieve this relative movement.

The inspection system 1 comprises a controller 12 for controlling the relative movement of the support 8 and of the optical system 2' to scan the measurement spot M along a desired measurement path on the frontside of the substrate S. The controller may comprise a microcontroller, data storage, input/output ports connected to the actuators and to other elements of the inspection system 1, and further computing resources that are configured, in hardware or in software, to precisely control the displacement of the measurement spot M on the desired measurement path. Advantageously, the controller 12 is also controlling the velocity of the measurement spot M along this path. The substrate S being precisely positioned on the support 8, the controller 12 stores and controls the position (in linear or polar coordinates) and velocity (linear velocity or rotational speed) of the measurement spot M in a referential linked to the substrate S.

The relative movement operated by the controller 12 may be rotational, or may be for instance a rotation of the support 8 (and of the substrate S) along a rotation axis r perpendicular to the plane of the support 8/substrate S, and disposed at the center of the substrate S. The measurement path described by the measurement spot M is then forming a concentric circle on the frontside of the substrate S. Alternatively, the relative movement may be linear, along the longitudinal direction x, and the measurement path is then forming a straight line on the frontside of the substrate S. The inspection system may be operated iteratively, after a relative displacement of the support 8 with respect to the optical system 2', to provide a plurality of measurements path along parallel, radial or concentric measurement paths, to provide a complete inspection of the substrate S frontside.

The inspection system 1 also comprises a collector for collecting at least a portion of the light scattered by defects present on, or close to, the frontside of the substrate S, but not the light specularly reflected on or close to the frontside of the substrate S. In the embodiment of figure 1, the collector is comprising a lens 9 collecting part of the diffuse light radiation. The lens 9 of this embodiment is centered about an axis passing through the measurement spot M and perpendicular to the substrate S. A portion of the scattered light 12 reflected from the substrate S is collected and directed to an optically conjugated point of the spot M by the lens 9. The collector also comprises complementary devices 10, such as an optical fiber or a bundle of optical fibers, arranged at or close to that conjugated point of the lens 9 to collect the scattered light. The inspection device 1 also comprises a detector 11, for instance a photodetector or an array of photodetectors, associated to the collector for receiving the collected light. The detector 11 provides a signal U(t), for instance an electrical signal, representing the variation in intensity of the collected light as the measurement spot M is scanned along the measurement path.

Finally, the inspection system 1 represented on the figure 1 comprises a processing device 13 connected to the detector 11 to receive the signal U(t) as the measurement progresses. The processing device 13 is also connected to the controller 12, to receive from the controller the position X_{M}(t) of the measurement spot M as the measurement progress, and possibly to also receive the velocity V_{M}(t) if this information is measured or determined by the controller 12. Velocity V_{M}(t) may also be derived from the position X_{M}(t) or may take constant value, such that this information may not be provided by the controller 12 to the processing device 13. The processing devices may correspond to, or comprise, a microprocessor, a microcontroller, a FPGA or any other computing resources (input/output ports, data storage,...) for processing the received information, and notably the signal U(t) to detect the presence of a particle or a defect on , or close to, the frontside of the substrate. This processing may be performed "on the fly", concurrently with the measurement or may be deferred after the measurement has been achieved.

The processing device 13 (or the detector 11) may comprises a converter to sample the signal U(t) at a given sampling rate and prepare raw measurement samples Uₖ.

### Support

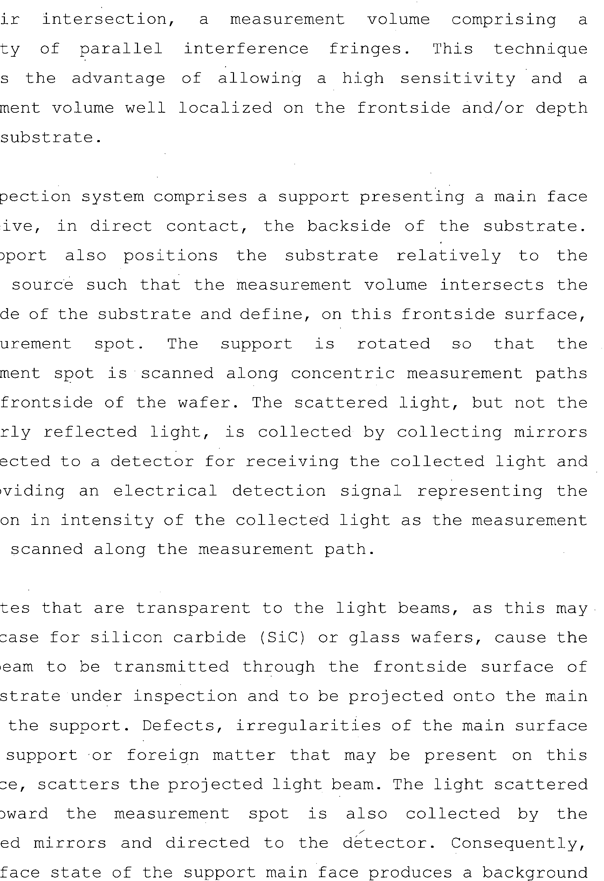

The figures 3a and 3b respectively represents a cross section and a top view of a support 8 according to one embodiment. The support presents a main face MF, visible on figure 3b, to receive the substrate S to be inspected. In this embodiment, the support 8 has a circular shape adapted to receive a substrate S in the form of a wafer, but this should not be considered as a necessary feature of the invention.

As mentioned in a previous paragraph, the support 8 could be designed and configured to have a dimension at least equal to the dimension of the substrate S to be inspected, or smaller or greater than the substrate. In this advantageous configuration, the substrate is kept flat during the inspection and is not deformed under its own weight. For instance, the support 8 may present a diameter comprised between 52 mm to 310 mm to receive a wafer whose standard diameter extends from 2 inches (50,8 mm) to 300 mm.

As this is well known, the support 8 may be provided with vacuum features, such as a through hole H and/or groove G illustrated on figure 3b, opening on the main face MF. These through hole H or groove G are connected to a vacuum circuit. During inspection, and while the substrate backside is contacting the main face MF of the support 8, the vacuum features are depressurized in order to apply a suction force to the substrate S so that it can be held firmly against the support 8.

The support 8 comprises a flat body 8a could be made, in some embodiment, of a non-transparent material at the inspection wavelength. For instance, the flat body 8a may be constituted of aluminum. The flat body 8a is presenting a first surface F1 oriented toward the main face MF

The first surface F1 is extremely flat and presents an optically polished surface to specularly reflect the incident light beam. The optically polished surface may be obtained by diamond machining, lapping and/or polishing, as this is for instance described in Peng Song et al, "High-precision turning and ultrasmooth direct polishing of aluminum alloy mirrors," Opt. Express 31, 30340-30358 (2023). Advantageously, the optically polished first surface of the flat body 8a presents an average roughness (Ra) of less than 10 nm. This average roughness is defined as the deviation of the surface from a mean height and may be measured using a conventional mechanical or optical profilometer.

Pursuing the description of Figures 3a and 3b, the support 8 also comprises a diamond-like carbon layer 8b (referred to as a DLC layer for the sake of brevity in the remainder of this description) disposed at least on and in contact with the optically polished first surface F1 of the flat body 8a.

The optical properties of DLC may depend on the ratio of SP2 hybridized carbon atoms and SP3 hybridized diamond in the composition of the layer. It may contain a certain amount of hydrogen. DLC can be used as a coating material with moderate scattering. Unlike other types of coatings, such as nickel, DLC does not appear to contaminate the substrate. The exposed surface of the DLC layer 8b is constituting the main face MF of the support 8. Since the DLC layer 8b is formed directly on the optically polished first surface, and since the layer is relatively thin and does not consist of large grains of material, its exposed surface has the same optically polished property as that of the first surface. Thus, like the first surface, the exposed surface of the DLC layer 8b favours the specular reflection of the incident light beam (6,6') rather than its scattering.

The DLC layer 8b may be deposited onto the first surface F1 of the flat body 8a using conventional deposition technique, such as physical vapor deposition (PVD) or and plasma-enhanced chemical vapor deposition (PECVD). Optical properties of the DLC film (refractive index and extinction coefficient notably) may depend on the deposition parameters. The superficial portion of the DLC layer 8b (preferably 40% or more of the layer thickness) may be constituted of amorphous carbon. It presents advantageously a thickness less than 10 micrometers. The DLC layer 8b presents advantageously an average roughness of less than 10 nm, giving it a mirror-like shine and high smoothness.

The DLC layer 8b may also extend on the peripheral side of the flat body 8a. The coating may also extend into the grooves, holes or other type of vacuum features formed in the flat body 8a resulting in a conformal coating, for the purpose of vacuum chucking the substrate.

Thanks to the low average roughness of the DLC layer 8b, the support main face MF presents an optically smooth surface, limiting scattering of the incident light beam and favorizing its specular reflection. Part of the incoming incident light beam which maybe transmitted through the DLC layer 8b and be reflected by the first surface F1 of the flat body 8a. This surface being also optically smooth, this transmitted part of the incident light beam is also specularly reflected, and the overall light scattered by the support 8 is minimized thus optimizing the signal to noise ratio at the detector of the inspection system.

Advantageously, the composition of the DLC layer 8b deposited on the flat body maybe selected so as to present a relatively large extinction coefficient, for instance larger than 0,7 for at least inspection wavelengths in the UV. The relatively large extinction coefficient, larger than 0,7, may also be present for inspection wavelengths in the visible range. This allows to absorb part of the incident light in the layer 8b and limits the part that reflects on the flat body first surface F1.

Also, to limit reflection on the main face MF, the DLC layer 8b may be deposited such that its optical index matches or is close to the material constituting the substate S to be inspected (DLC refractive index may be typically comprised between 1,7 and 2,2). For instance, the DLC layer 8b may be deposited to present a refractive index greater than 2,0 to approach the refractive index of a substrate S made of SiC (presenting a refractive index of 2,6). Or the DLC layer 8b may be deposited to present a refractive index lower than 1,8 to approach the refractive index of a substrate S made of quartz (presenting a refractive index of 1,5) or sapphire (presenting a refractive index of 1,8). Therefore, and more generally, the DLC layer may be arranged to present a refractive index less than 25% different, or less than 20% different, from the refractive index of the substrate.

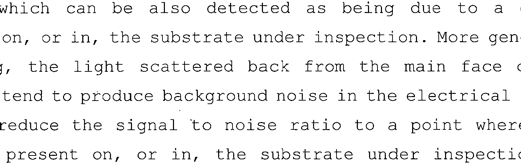

The benefits of the proposed support 8 can be appreciated by comparing, respectively on figure 4a and figure 4b, the reflection of an incident light beam 6 on a support according to the state of the art and according to the invention.

On the figure 4a, the incident light beam 6 is propagating through the substrate S (transparent at the inspection wavelength of the substrate) and is projecting onto the main face of the support 8. This support being conventional, the light beam 6 is scattered and reflected by the main face, the scattered light being collected at least partly by the collector of the inspection system and tend to produce background noise in the electrical signal established by this system.

Conversely, the light beam 6 propagating through the substrate S and projecting onto the main face of the support 8 according to the invention (figure 4b), is principally reflected specularly by the main face and the first face, minimizing the scattered part. The specular reflection is not captured by the collector in detection system, and the background noise is therefore minimized. In addition, if the refractive index of the DLC coating matches the refractive index of the substrate, for instance within 25%, or 20%, as previously described, the light exiting from the substrate is mostly transmitted through the main face, thus even minimizing the first specular reflection. With a DLC coating having a high extinction ratio, for instance larger than 0.7, the light transmitted through the main face and reflected on the first surface is significantly absorbed, thus minimizing the intensity of the specular reflection on the first surface.

All these effects, with or without the matching of refractive indices, allow minimizing the effects of the light incident on the support on the measurements.

Other variations to the disclosed embodiments can be understood and effected by those skilled in the art in practicing the claimed invention, from a study of the drawings, the disclosure, and the appended claims.

## Claims

1. A support (8) for a dark field optical inspection system comprising an optical source (2) emitting at least one incident light beam (6, 6'), the at least one incident light beam presenting an inspection wavelength, the support (8) comprising a main face (MF) to receive a substrate (S) made of a transparent material at the inspection wavelength, the support (8) comprising:
- a flat body (8a) made of a non-transparent material at the inspection wavelength and presenting an optically polished first surface (F1) oriented toward the main face (MF) to specularly reflect the incident light beam (6,6'), and
- a diamond like carbon layer (8b) disposed at least on, and in contact with, the optically polished first surface (F1) of the flat body (8a), an exposed surface of the diamond like carbon layer (8b) constituting the main face (MF) of the support (8) and favorizing the specular reflection of the incident light beam (6,6') rather than its scattering.

2. The support (8) according to claim 1 wherein the flat body (8a) is made of aluminum.

3. The support (8) according to claim 2 wherein the flat body (8a) is polished by diamond machining, polishing, or lapping.

4. The support (8) according to any of claims 1 to 3 wherein the first surface (F1) is presenting an average roughness of less than 10 nm.

5. The support (8) according to any of claims 1 to 4 wherein the exposed surface of the diamond like carbon layer (8b) is presenting an average roughness of less than 10 nm.

6. The support (8) according to any of claims 1 to 5 wherein the diamond like carbon layer (8b) presents a thickness less than 10 micrometers.

7. The support (8) according to any of claims 1 to 6 wherein a superficial portion of the diamond like carbon layer (8b) is constituted of amorphous carbon.

8. The support (8) according to any of claim 1 to 7 wherein the diamond like carbon layer (8b) presents a refractive index greater than 2.0.

9. The support (8) according to any of claim 1 to 7 wherein the diamond like carbon layer (8b) presents a refractive index lower than 1.8.

10. The support (8) according to any preceding claims, wherein the diamond like carbon layer (8b) presents an extinction coefficient larger than 0.7 for at least wavelengths in the UV.

11. The support (8) according to any preceding claims wherein the flat body (8a) is provided with vacuum features (H,B) the diamond like carbon layer (8b) extending in the vacuum features.

12. A dark field optical inspection system for a substrate (S) comprising:
- at least one optical source (2) for emitting at least one light beam (6, 6') presenting an inspection wavelength;
- a support (8) according to any of claim 1 to 11 arranged to position the substrate (S) relatively to the optical source (2) such that the at least one light beam (6, 6') is projected on the substrate (S).

13. The dark field optical inspection system according to claim 12 further comprising a collector (9) for collecting at least a portion of the light scattered by defects present on, or close to, the frontside of the substrate (S), but not the light specularly reflected on the frontside of the substrate (S) and/or by the support (8).

14. The dark field optical inspection system according to claim 13 further comprising:
- a controller (12) for controlling a relative movement of the support (8) and of the at least one optical source (2) to scan the at least one light beam (6, 6') along a measurement path on the frontside of the substrate (S);
- a detector (11) associated to the collector (9) for receiving the collected light and for providing a signal representing the variation in intensity of the collected light as the at least one light beam (6, 6') is scanned along the measurement path.

15. The dark field optical inspection system according to any of claim 12 to 14 wherein the at least one optical source (2) is configured to emit a first and a second light beams (6, 6') intersecting at a measurement spot (M) on the frontside of the substrate (S), the first and the second light beams presenting the inspection wavelength.
